# EUROPÄISCHE PATENTSCHRIFT

(11) **EP 1 412 841 B1**
(45) Veröffentlichungstag und Bekanntmachung des Hinweises auf die Patenterteilung: **07.07.2010**
(21) Anmeldenummer: 02758412.7
(22) Anmeldetag: 30.07.2002
(51) Int. Cl.: H04L 27/26

(54) **VERFAHREN ZUM ÜBERTRAGEN VON DATENSTRÖMEN UND WARMSTARTSEQUENZ FÜR S (H) DSL-MODEMS**
METHOD FOR TRANSMITTING DATA FLOWS AND WARM START SEQUENCE FOR S(H)DSL MODEMS
PROCEDE DE TRANSMISSION DE FLUX DE DONNEES ET SEQUENCE DE DEMARRAGE A CHAUD POUR MODEMS SHDSL

(30) Priorität: 03.08.2001 DE 10139779
(43) Veröffentlichungstag der Anmeldung: 28.04.2004
(73) Patentinhaber: Lantiq Deutschland GmbH, 85579 Neubiberg (DE)
(72) Erfinder: HEISE, Bernd, 81825 München (DE)
(74) Vertreter: Charles, Glyndwr
(86) Internationale Anmeldenummer: PCT/EP2002/008485
(87) Internationale Veröffentlichungsnummer: WO 2003/014900

(56) Entgegenhaltungen:
- US-A- 5 631 952
- US-A- 5 852 630

## Beschreibung

Die vorliegende Erfindung betrifft ein Verfahren und eine Vorrichtung zum Übertragen von Datenströmen, und betrifft insbesondere ein Verfahren zum Übertragen von Datenströmen, bei dem zur Aktivierung von in einen Bereitschaftszustand deaktivierten Sendeempfangseinrichtungen (Modems) eine Warmstart-Sequenz ausgeführt wird.

Bei Übertragungsverfahren über Kupferleitungen besteht das Problem, vermittlungsseitige Sendeempfangseinrichtungen und teilnehmerseitige Sendeempfangseinrichtungen, die über mindestens einen Datenübertragungspfad verbunden sind, aus einem deaktivierten Zustand bzw. aus einem Bereitschaftszustand in einen aktivierten Zustand zu überführen, wobei diese Operation im Folgenden als ein "Warmstart" bezeichnet wird.

Bei den xDSL-Technologien handelt es sich um verschiedene Nutiungsarten/Trägerverfahren einer leitungsgebundenen Datenstromübertragung von einer Vermittlungsstelle zu einer Teilnehmerseite.

Beispielsweise werden folgende DSL-(DSL = Digital Subscriber Line, digitale Teilnehmerleitung)-Verfahren eingesetzt:
(i) ADSL: asymmetrisches DSL,
(ii) VDSL: Very High Data Rate DSL, DSL mit sehr hoher Datenrate,
(iii) SDSL: Symmetrical Single Pair DSL (DSL mit symmetrischer Einzelpaarleitung) und
(iv) S(H)DSL: (SDSL mit hoher Datenrate) eingesetzt.

Diese Übertragungsverfahren über den mindestens einen Datenübertragungspfad beruhen auf vermittlungsseitigen Sendeempfangseinrichtungen und teilnehmerseitigen Sendeempfangseinrichtungen, wobei das Problem besteht, dass beide Sendeempfangseinrichtungen aus Energiespargründen in einen Energiesparmodus zu überführen bzw. zu deaktivieren sind.

Um aus einem Energiesparmodus bzw. einem Bereitschaftsmodus in einen Betriebsmodus zu gelangen, müssen die deaktivierten Sendeempfangseinrichtungen mittels einer Warmstart-Sequenz reaktiviert werden.

Hierbei kann vorausgesetzt werden, dass vor einer ersten Warmstart-Sequenz ein "Kaltstart" erfolgt ist, bei welchem eine Aktivierung einer Datenübertragung auf einer Leitung erfolgt ist.

Die vermittlungsseitigen Sendeempfangseinrichtungen und die teilnehmerseitigen Sendeempfangseinrichtungen adaptieren sich hierbei auf die Parameter bzw. Eigenschaften der Leitung des Datenübertragungspfades.

In nachteiliger Weise dauert dieser Vorgang typischerweise 30 Sekunden und mehr, so dass ein Warmstart, der eine Warmstart-Sequenz aufweist, und wesentlich geringere Zeitdauern für eine Aktivierung benötigt, unbedingt erforderlich ist. Hierbei müssen für allen späteren Aktivierungen Kenntnisse der Eigenschaften der Leitung des Datenübertragungspfades in einem Bruchteil der oben genannten Zeit (30 Sekunden) ausgeführt werden.

Sämtliche dieser Aktivierungen werden als "Warmstarts" bezeichnet. Es existieren international standardisierte Warmstart-Sequenzen beispielsweise für ISDN-U-Schnittstellen, wie in der Literaturstelle:
"ETSI TS 102 080, Integrated Services Digital Network (ISDN) basic rate access, Third Edition, November 1998"
   und der Literaturstelle:
"ANSI T1.601-1988, Integrated Services Digital Network (ISDN), ANSI, September 1988" beschrieben.
   Für xDSL, insbesondere für S-(H)DSL-Verfahren sind unterschiedliche Verfahren bekannt, welche sämtlich gravierende Nachteile für vorhandene Sendeempfangseinrichtungen aufweisen. Derartige Verfahren sind in den Literaturstellen
"Infineon, "SDSL Warm Start Capability", ETSI-Meeting TM6 Amsterdam, December 1999, 994t51a0";
"Adtran, "Warm Start Considerations", ETSI-Meeting TM6 Armsterdam, December 1999, 994t59a0"; "Infineon, Adtran, "SDSL Warm Start", Helsinki, May 2000, 002t25a1";
"Infineon "Warmstart Wake-up tones" ETSI-Meeting TM6 Vienna September 2000, 003t42a0";
"Conexant Systems "Warm start wake up signals" ETSI-Meeting TM6 Monterey, November 2000, 00t24a0";
"Conexant Systems "M-Sequence based line probe signals for both keep-alive and warmstart wake-up signals" ETSI-Meeting TM6 Sophia Antipolis, February 2001, 011t25a0"; und
"Infineon, "warmstart-Sequence", ETSI-Meeting TM6 Gent, May 2001"; "Infineon "Warmstart wake-up tones", Gent, May 2001" beschrieben.

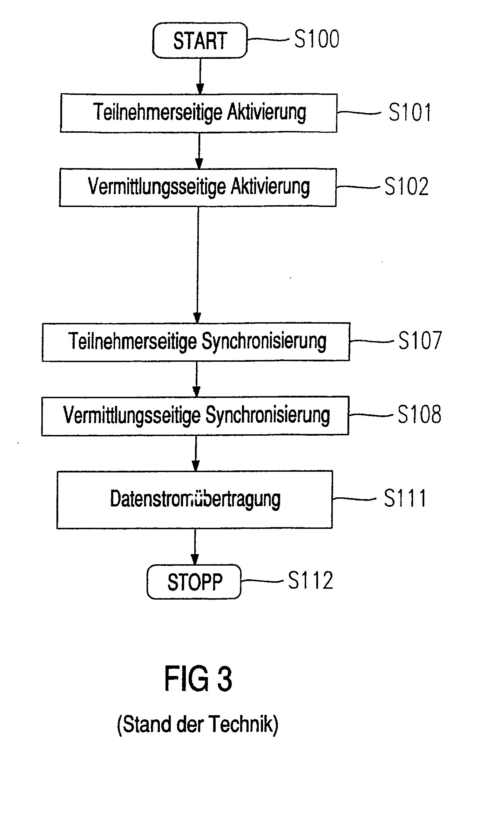

Figur 3 zeigt ein Ablaufdiagram in Blockform zur Veranschaulichung eines Verfahrens zum Übertragen von Datenströmen nach dem Stand der Technik. Nach einem Startschritt S100 erfolgt eine teilnehmerseitige Aktivierung in einem teilnehmerseitigen Aktivierungsschritt S101. Die teilnehmerseitige Aktivierung ruft eine vermittlungsseitige Aktivierung hervor, die in einem vermittlungsseitigen Aktivierungsschritt ausgeführt wird. Daraufhin erfolgt in herkömmlicher Weise eine teilnehmerseitige Synchronisierung (Schritt S107) und schließlich eine vermittlungsseitige Synchronisierung (Schritt S108): Nach den Schritten S101-S108 kann eine Datenstromübertragung in einem Datenstromübertragungsschritt S111 erfolgen. Nach einer erfolgten Datenstromübertragung wird der Ablauf gestoppt (Schritt S112).

Ein Hauptnachteil herkömmlicher Verfahren zum Übertragen von Datenströmen, wobei eine Deaktivierung von Sendeempfangseinrichtungen in einen Bereitschaftszustand bereitgestellt wird, besteht darin, dass vor einer Synchronisierung bzw. vor einem spezifischen Warmstart ein bekanntes Signal von einem fernen Ende (Far End Signal) bereitgestellt werden muss, um einen Veränderung des Signals vom fernen Ende infolge einer Veränderung von Eigenschaften einer Leitung des mindestens einen Datenübertragungspfades seit einer letzten Aktivierung zu erfassen.

In nachteiliger Weise wirken sich beispielsweise Störungen wie Temperaturschwankungen oder Änderungen einer Luftfeuchtigkeit auf Leitungseigenschaften aus, wobei die Leitungseigenschaften in einer unvorhersehbaren Weise verändert werden können.

Ein weiterer Nachteil bekannter Verfahren besteht darin, dass Sendeempfangseinrichtungen vorhanden sind, die vor einer Synchronisierung eine Zeitdauer ohne Signal von einem fernen Ende ("Far End Siqnal") benötigen, um sich auf eine Veränderung eines Echos des eigenen Sendesignals zu adaptieren, was unter anderem auch durch eine Veränderung von Leitungseigenschaften des mindestens einen Datenübertragungspfades verursacht wird.

In nachteiliger Weise würde eine feste Warmstartsequenz in den vermittlungsseitigen Sendeempfangseinrichtungen und den teilnehmerseitigen Sendeempfangseinrichtungen einen hohen Aufwand bedeuten und eine Warmstart-Sequenz unnötig verlängern, was neben einer Erhöhung der Kosten auch zu einer Reduzierung der spezifischen Vorteile eines Warmstarts führt.

Die US 5,852,630 betrifft ein Verfahren und eine Vorrichtung für eine RADSL-Sende-/Empfänger-Warmstartaktivierungsprozedur, wobei eine Verbesserung einer DSL-Kommunikation dadurch erreicht wird, dass eine verkürzte Warmstart-Trainingssequenz ausgeführt wird. In nachteiliger Weise erfordert das Verfahren der US 5,852,630 eine große Anzahl von Schritten für den Warmstart.

Die US 5,631,952 beschreibt eine Vorrichtung und ein Verfahren für eine Datenkommunikationseinrichtung wie etwa ein Modem, um einen übergang von einem Bereitschaftszustand in einer. Betriebszustand durchzuführen. Hierbei wird ein Auftreten des Startbits in seriellen Daten bestimmt, ein Interrupt-Signal innerhalb einer ersten vorbestimmten Zeitperiode auf die Bestimmung folgend erzeugt und ein Übergang der Datenkommunikationseinrichtung von dem Bereitschaftszustand in den Betriebszustand in Abhängigkeit von dem Interrupt-Signal durchgeführt. In nachteiliger Weise erfordert das Verfahren der US 5,631,952 eine feste Prozedur für einen Warmstart und ist in unzweckmäßiger Weise nicht flexibel dahingehend, dass ein fester Ablauf bei einer Aktivierung von in einem Bereitschaftszustand deaktivierten Sende-/Empfangseinrichtungen vermieden wird.

In der Publikation "ITU-T-Standard G992.2: Splitterless asymmetric digital Subscriber Line (ADSL) Transceivers, Juni 1999, Seiten 50-99" werden bei einem "Handshake" zwischen der teilnehmerseitigen und der vermittlungsseitigen Sende/Empfangseinrichtung Parameter ausgetauscht, welche die Fähigkeiten der beiden Sende-/Empfangseinrichtungen beschreiben und somit einen Ablauf einer Initialisierungsprozedur beeinflussen können. In nachteiliger Weise stellt das in der Publikation offenbarte Verfahren keine Flexibilität derart bereit, dass ein fester Ablauf bei einer Aktivierung von in einem Bereitschaftszustand deaktivierten Sende-/Empfangseinrichtungen vermieden wird."

Es ist somit eine Aufgabe der vorliegenden Erfindung, ein Verfahren zum Übertragen von Datenströmen bereitzustellen, bei dem zur Aktivierung von in einem Bereitschaftszustand deaktivierten Sende-/Empfangseinrichtungen eine Warmstart-Sequenz ausgeführt wird, die keinen festen Ablauf bei einer Aktivierung von in einen Bereitschaftszustand deaktivierten Sende-/Empfangseinrichtungen erfordert.

Diese Aufgabe wird erfindungsgemäß durch das in dem Patentanspruch 1 angegebene Verfahren gelöst.

Weitere Ausgestaltungen der Erfindung ergeben sich aus den Unteransprüchen.

Ein wesentlicher Gedanke der Erfindung besteht darin, vorgebbar mindestens ein zusätzliches Segment in eine Warmstart-Sequenz einzufügen, bevor eine Synchronisierung ausgeführt wird.

Erfindungsgemäß sind vier zusätzliche Segmente vorgesehen, die einzeln oder in einer beliebigen Kombination in eine warmstart-Sequenz einfügbar sind, was entweder bei einer Kaltstartaktivierung oder bei der jeweils zeitlich vorhergehenden Aktivierung (Kaltstart oder Warmstart) vereinbart wird.

Im einzelnen sind dies
(i) ein vermittlungsseitiger Übertragungsleitungsbestimmungsschritt,
(ii) ein teilnehmerseitiger Übertragungsleitungsbestimmungsschritt,
(iii) ein vermittlungsseitiger Wiederanpassungsschritt; und
(iv) ein teilnehmerseitiger Wiederanpassungsschritt.

Die o.a. Bezeichnung "Wiederanpassungsschritt" bezieht sich auf eine Echoeliminierung.

Es ist somit ein Hauptvorteil der vorliegenden Erfindung, dass eine äußerst flexible Warmstart-Sequenz bereitgestellt werden kann.

Vor einer Warmstart-Sequenz hat per Definition ein erfolgreicher Kaltstart stattgefunden, wobei in dem Kaltstart jede Seite (Vermittlungsseite und/oder Teilnehmerseite) der jeweils anderen Seite eine Aussendung spezifischer Signale mitteilt.

Das erfindungsgemäße Verfahren zum Übertragen von Datenströmen, bei dem zur Aktivierung von in einen Bereitschaftszustand deaktivierten Sendeempfangseinrichtungen eine Warmstart-Sequenz ausgeführt wird, weist im Wesentlichen die folgenden Schritte auf:
a) Bestimmen von Übertragungsleitungsparametern mittels einer vermittlungsseitigen Sendeempfangseinrichtung nach einem Bereitstellen eines teilnehmerseitigen Sendesignals;
b) Bestimmen von Übertragungsleitungsparametern mittels einer teilnehmerseitigen Sendeempfangseinrichtung nach einem Bereitstellen eines vermittlungsseitigen Sendesignals;
c) Wiederanpassen einer Echoeliminierung mittels einer teilnehmerseitigen Sendeempfangseinrichtung nach einem Bereistellen eines teilnehmerseitigen, d.h. eigenen Sendesignals; und
d) Wiederanpassen einer Echoeliminierung mittels einer vermittlungsseitigen Sendeempfangseinrichtung nach einem Bereitstellen eines vermittlungsseitigen, d.h. eigenen Sendesignals.

In den Unteransprüchen finden sich vorteilhafte Weiterbildungen und Verbesserungen des jeweiligen Gegenstandes der Erfindung.

Gemäß einer bevorzugten Weiterbildung der vorliegenden Erfindung sind in S(H)DSL- Aktivierungsrahmen pro Datenübertragungsrichtung jeweils zwei Bits enthalten, die bestimmen, welche der oben aufgeführten Schritte a) bis d) ausgeführt werden.

Gemäß noch einer weiteren bevorzugten Weiterbildung der vorliegenden Erfindung werden Zeitdauern für Signale, mit welchen eine Wiederanpassung einer Echoeliminierung ausgeführt wird, übertragen.

Gemäß noch einer weiteren bevorzugten Weiterbildung der vorliegenden Erfindung sind Wartezeitdauern zwischen aufeinanderfolgenden Sequenzen variabel vorgebbar.

Ausführungsbeispiele der Erfindung sind in den Zeichnungen dargestellt und in der nachfolgenden Beschreibung näher erläutert.

In den Zeichnungen zeigen:
- Figur 1: eine Grafik einer Warmstart-Sequenz mit vier zu- sätzlichen Segmenten gemäß einem Ausführungsbei- spiel der vorliegenden Erfindung;
- Figur 2: ein Ablaufdiagramm eines Verfahrens zum Übertragen von Datenströmen, bei dem zur Aktivierung von in einen Bereitschaftszustand deaktivierten Sendeemp- fangseinrichtungen eine Warmstart-Sequenz gemäß ei- nem Ausführungsbeispiel der vorliegenden Erfindung durchgeführt wird; und
- Figur 3: ein Ablaufdiagramm zum Übertragen von Datenströmen in einer Sequenz nach dem Stand der Technik.

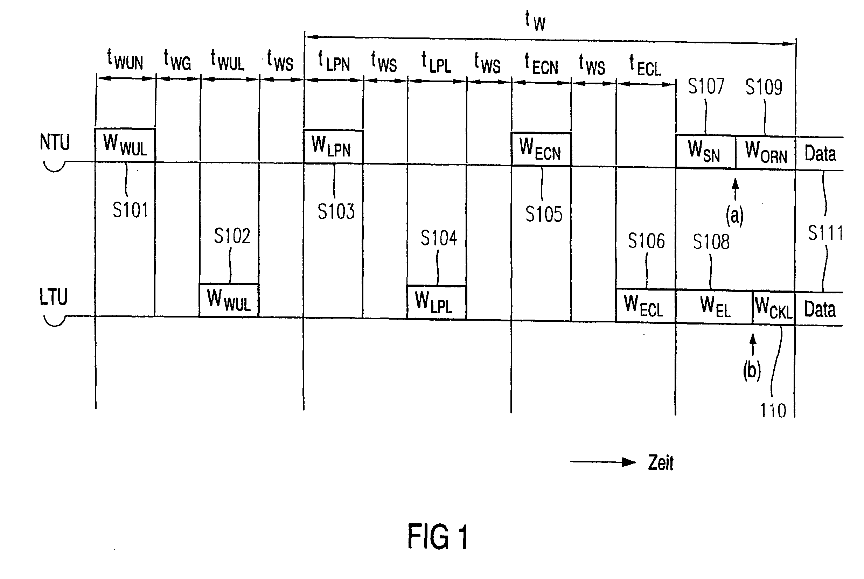

Figur 1 zeigt eine Warmstart-Sequenz, wobei zwischen Schritten, die in einer vermittlungsseitigen Sendeempfangseinrichtung LTU ausgeführt werden, und Schritten, die in einer teilnehmerseitigen Sendeempfangseinrichtung NTU ausgeführt werden, unterschieden wird.

Gewöhnlich erfolgt ein Start einer Warmstart-Sequenz von der Teilnehmerseite aus, indem ein sogenanntes Wecksignal gesendet wird, woraufhin eine Antwort von der Vermittlungsseite über die vermittlungsseitige Sendeempfangseinrichtung erfolgt. Es sei darauf hingewiesen, dass es ebenso möglich ist, von der vermittlungsseitigen Sendeempfangsrichtung LTU ein "Wecksignal" bereitzustellen, wobei hier auf eine Antwort von der teilnehmerseitigen Sendeempfangseinrichtung NTU nicht gewartet wird.

Die einzelnen Schritte der in Figur 1 gezeigten Warmstart-Sequenz sind entlang einer Zeitachse (Zeit) aufgetragen, wobei einzelne, durch Doppelpfeile angegebene Zeitdauer-Intervalle nicht notwendigerweise gleich sind, sondern in ihrer Länge variierbar sind.

In einem teilnehmerseitigen Aktivierungsschritt S101 wird während einer Aktivierungszeit t_{WUN} (WUN = Wakeup von NTU, von der teilnehmerseitigen Sendeempfangseinrichtung) ein teilnehmerseitiges "Wecksignal" gesendet. In dem vermittlungsseitigen Aktivierungsschritt S102 reagiert die vermittlungsseitige Sendeempfangseinrichtung LTU auf das Signal W_{WUN} mit einem Signal W_{WUL}. Die folgenden sieben Zeitschritte sind gemäß einem Ausführungsbeispiel der vorliegenden Erfindung ausgeführt, wobei eine Zeit tws eine vorgebbare Wartezeit bezeichnet.

Es sei darauf hingewiesen, dass, obwohl die Wartezeiten als gleich große Zeitdauern in der Figur 1 dargestellt sind, die Wartezeiten unterschiedliche Zeitdauern einnehmen können.

Erfindungsgemäß wird anschließend vorgebbar keiner oder mindestens einer der Schritte S103-S106 ausgeführt.

In dem Schritt S103 wird eine teilnehmerseitige Übertragungsleitungsbestimmung durchgeführt, wobei ein Signal W_{LPN} gesendet wird. In gleicher Weise erfolgt in einem Schritt S104 eine vermittlungsseitige Übertragungsleitungsbestimmung, wobei ein Signal W_{LPL} ausgesendet wird. Die beiden Übertragungsleitungsbestimmungsschritte dienen dazu, die Eigenschaften einer spezifischen Übertragungsleitung des mindestens einen Datenübertragungspfades bei einem Warmstart effektiv zu bestimmen. Es sei darauf hingewiesen, dass die Schritte S103-S106 erfindungsgemäß in einer beliebigen Reihenfolge ausgeführt werden können.

Welche der Schritte S103-S106 ausgeführt werden, und in welcher Reihenfolge die auszuführenden Schritte ausgeführt werden, wird erfindungsgemäß in einem einfachsten Fall durch zwei Bits pro Datenübertragungsrichtung bestimmt.

Hierbei wird erfindungsgemäß der S(H)DSL-Aktivierungsrahmen benutzt, in welchem sich bis zu 67 ungenutzte Bits befinden, die in folgender Weise für ein Ausführungsbeispiel der Erfindung eingesetzt werden sollen:
1. Bit: Anforderung eines Signals für eine Übertragungsleitungsbestimmung,
2. Bit: Anforderung einer Sendepause der Gegenstelle zum Wiederanpassen der eigenen Echoeliminierung;
3. bis 67. Bit: bleiben weiterhin ungenutzt.

Es sei darauf hingewiesen, dass jede andere Reihenfolge und Anordnung der Bits in dem 67 Bit langen Block ungenutzter Bits in den Umfang der vorliegenden Erfindung fällt.

Wie in Figur 1 gezeigt, erfolgt beispielsweise nach einer Ausführung der Schritte S103 und S104 ein teilnehmerseitiger Wiederanpassungsschritt S105, wobei während einer Zeitdauer t_{ECN} ein Echoeliminierungssignal W_{ECN} ausgesendet wird.

Mit diesem Echoeliminierungssignal erfolgt eine teilnehmerseitige Wiederanpassung. Ein nachfolgender vermittlungsseitiger Wiederanpassungsschritt führt von der Vermittlungsseite, d.h. von der vermittlungsseitigen Sendeempfangseinrichtung LTU einen zu dem Schritt S105 äquivalenten Schritt aus.

Während einer Zeitdauer t_{ECL} wird ein Signal W_{ECL} gesendet, was bedeutet, dass eine Echoeliminierung von der Vermittlungsseite aus durchgeführt wird. Die Schritte S107-S108 entsprechend der Sequenz eines unter Bezugnahme auf Figur 3 beschriebenen herkömmlichen Verfahrens zum Übertragen von Datenströmen. Nach dem Schritt S107 befindet sich die teilnehmerseitige Sendeempfangseinrichtung in einem Betriebszustand, so dass ein anschließender teilnehmerseitiger Bestätigungsschritt S109 mit einem Signal W_{OKN} erfolgt.

Vermittlungsseitig erfolgt eine Synchronisierung in einem Schritt S108, wobei ein Signal W_{SL} bereitgestellt wird. Zu einem Zeitpunkt, der mit einem Pfeil (b) in Figur 1 bezeichnet ist, sind sowohl die vermittlungsseitige Sendeempfangseinrichtung LTU als auch die teilnehmerseitige Sendeempfangseinrichtung NTU in einem Betriebszustand.

Nach einem weiteren, vermittlungsseitigen Bestätigungsschritt S110 erfolgt eine gewöhnliche Datenübertragung, wobei beide Sendeempfangseinrichtungen transparent für Nutzdaten sind, in dem gezeigten Ausführungsbeispiel der Figur 1 als Datenstromübertragungsschritt S111 bezeichnet.

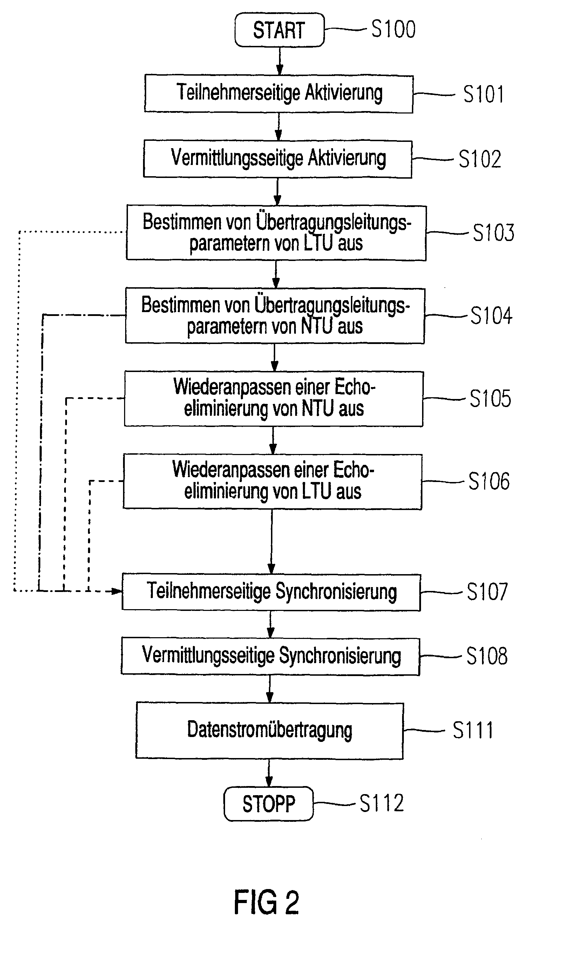

Figur 2 zeigt ein Ablaufdiagramm eines Ausführungsbeispiels des erfindungsgemäßen Verfahrens zum Übertragen von Datenströmen, wobei nach einem Startschritt S100 ein teilnehmerseitiger Aktivierungsschritt S101 und darauf ein vermittlungsseitiger Aktivierungsschritt S102 erfolgt.

Die Schritte S103 bis S106 umfassen, wie obenstehend unter Bezugnahme auf Figur 1 erwähnt, einen vermittlungsseitigen Übertragungsleitungsbestimmungsschritt S103, einen teilnehmerseitigen Übertragungsleitungsbestimmungsschritt S104, einen teilnehmerseitigen Wiederanpassungsschritt S105 und einen vermittlungsseitigen Wiederanpassungsschritt S106.

Die gestrichelten Linien, welche zu dem teilnehmerseitigen Synchronisierungsschritt S107 führen, veranschaulichen, dass vorgebbar keiner oder mindestens einer der Schritte S103-S106 auszuführen ist, eine Reihenfolge aber beliebig angeordnet werden kann.

Nach einer Ausführung keiner, einer oder mehrerer der erfindungsgemäßen Schritte S103-S106 erfolgt ein teilnehmerseitiger Synchronisierungsschritt S107, ein vermittlungsseitiger Synchronisierungsschritt S108 und ein Datenstromübertragungsschritt S111, wie in Verfahren zum Übertragen von Datenströmen nach dem Stand der Technik, beispielsweise beschrieben unter Bezugnahme auf Figur 3.

Eine Datenübertragung wird mit einem Stoppschritt S112 abgeschlossen.

Es ist ein erheblicher wirtschaftlicher Vorteil der vorliegenden Erfindung, dass eine Warmstart-Sequenz sehr flexibel ausgelegt ist, wobei zusätzlich eine Steuerung durch bisher ungenutzte Bits bezüglich der in der Warmstartphase auszuführenden Segmente in einer Kaltstartphase bestimmt werden kann. Weiterhin kann eine Auswahl von Zeitdauern der Segmente in der Kaltstartphase bestimmt werden.

Bezüglich dem in Figur 3 dargestellten Ablaufdiagramm eines herkömmlichen Verfahrens zum Übertragen von Datenströmen wird auf die Beschreibungseinleitung verwiesen.

Obwohl die vorliegende Erfindung vorstehend anhand bevorzugter Ausführungsbeispiele beschrieben wurde, ist sie darauf nicht beschränkt, sondern auf vielfältige Weise modifizierbar.

### Bezugszeichenliste

In den Figuren bezeichnen gleiche Bezugszeichen gleiche oder funktionsgleiche Komponenten oder Schritte.
- S100: Startschritt
- S101: Teilnehmerseitiger Aktivierungsschritt
- S102: Vermittlungsseitiger Aktivierungsschritt
- S103: Vermittlungsseitiger Übertragungsleitungsbestimmungs- schritt
- S104: Teilnehmerseitiger Übertragungsleitungsbestimmungs- schritt
- S105: Teilnehmerseitiger Wiederanpassungsschritt
- S106: Vermittlungsseitiger Wiederanpassungsschritt
- S107: Teilnehmerseitiger Synchronisierungsschritt
- S108: Vermittlungsseitiger Synchronisierungsschritt
- S109: Teilnehmerseitiger Bestätigungsschritt
- S110: Vermittlungsseitiger Bestätigungsschritt
- S111: Datenstromübertragungsschritt
- S112: Stoppschritt
- LTU: Vermittlungsseitige Sendeempfangseinrichtung
- NTU: Teilnehmerseitige Sendeempfangseinrichtung

## Patentansprüche

1. Verfahren zum Übertragen von Datenströmen, bei dem zur Aktivierung von in einem Bereitschaftszustand deaktivierten Sendeempfangseinrichtungen (LTU, NTU) eine Warmstartsequenz ausgeführt wird, wobei in einer zeitlich vorhergehenden Aktivierung mittels eines Aktivierungsrahmens, welcher für jede Datenübertragungsrichtung jeweils mindestens zwei Bits aufweist, bestimmt wird, welche der folgenden Schritte in der Warmstartsequenz ausgeführt werden:
a) Bestimmen von Übertragungsleitungsparametern (S103) mittels einer vermittlungsseitigen Sendeempfangseinrichtung (LTU) nach einem Bereitstellen eines teilnehmerseitigen Sendesignals (S101);
b) Bestimmen von Übertragungsleitungsparametern (S104) mittels einer teilnehmerseitigen Sendeempfangseinrichtung (NTU) nach einem Bereitstellen eines vermittlungsseitigen Sendesignals (S102);
c) Wiederanpassen einer Echoeliminierung (S105) mittels einer teilnehmerseitigen Sendeempfangseinrichtung (NTU) nach einem Bereitstellen eines teilnehmerseitigen Sendesignals (S101); und
d) Wiederanpassen einer Echoeliminierung (S106) mittels einer vermittlungsseitigen Sendeempfangseinrichtung (LTU) nach einem Bereitstellen eines vermittlungsseitigen Sendesignals (S102).

2. Verfahren nach Anspruch 1,
**dadurch gekennzeichnet,**
**dass** Zeitdauern für Signale, mit welchen eine Wiederanpassung einer Echoeliminierung durchgeführt wird, in einer zeitlich vorhergehenden Aktivierung übertragen werden.

3. Verfahren nach Anspruch 1,
**dadurch gekennzeichnet,**
**dass** Zeitdauern für Signale, mit welchen die Übertragungsleitungsparameter bestimmt werden, in einer zeitlich vorhergehenden Aktivierung übertragen werden.

4. Verfahren nach Anspruch 1,
**dadurch gekennzeichnet,**
**dass** Wartezeitdauern zwischen aufeinanderfolgenden Sequenzen variabel vorgebbar sind.

## Claims

1. Method for transmitting data streams where transmission/reception devices (LTU, NTU) deactivated to a standby state are activated by performing a warm start sequence, with activation at a previous time by means of an activation frame, which respectively has at least two bits for each data transmission direction, involving determination of which of the following steps in the warm start sequence are performed:
a) transmission line parameters are determined (S103) using an exchange-end transmission/reception device (LTU) following provision of a subscriber-end transmitted signal (S101);
b) transmission line parameters are determined (S104) using a subscriber-end transmission/reception device (NTU) following provision of an exchange-end transmitted signal (S102);
c) echo cancellation is realigned (S105) using a subscriber-end transmission/reception device (NTU) following provision of a subscriber-end transmitted signal (S101); and
d) echo cancellation is realigned (S106) using an exchange-end transmission/reception device (LTU) following provision of an exchange-end transmitted signal (S102).

2. Method according to Claim 1,
**characterized**
**in that** time periods for signals used to realign echo cancellation are transmitted during activation at a previous time.

3. Method according to Claim 1,
**characterized**
**in that** time periods for signals used to determine the transmission line parameters are transmitted during activation at a previous time.

4. Method according to Claim 1,
**characterized**
**in that** waiting time periods can be prescribed on a variable basis between successive sequences.

## Revendications

1. Procédé pour transmettre flux de données, selon lequel on exécute une séquence de démarrage à chaud pour l'activation de dispositifs d'émission et de réception (LTU, NTU) désactivés dans un état de disponibilité, sachant que l'on détermine, dans une activation chronologiquement antérieure et au moyen d'une trame d'activation qui comporte au moins deux bits pour chaque sens de transmission de données, lesquelles des étapes suivantes sont exécutées dans la séquence de démarrage à chaud :
a) détermination de paramètres de ligne de transmission (S103) au moyen d'un dispositif d'émission et de réception côté ligne (LTU) après une mise à disposition d'un signal d'émission côté abonné (S101) ;
b) détermination de paramètres de ligne de transmission (S104) au moyen d'un dispositif d'émission et de réception côté abonné (NTU) après une mise à disposition d'un signal d'émission côté ligne (S102) ;
c) réadaptation d'une élimination d'écho (S105) au moyen d'un dispositif d'émission et de réception côté abonné (NTU) après une mise à disposition d'un signal d'émission côté abonné (S101) ;
d) réadaptation d'une élimination d'écho (S106) au moyen d'un dispositif d'émission et de réception côté ligne (LTU) après une mise à disposition d'un signal d'émission côté ligne (S102).

2. Procédé selon la revendication 1, **caractérisé en ce que,** dans une activation chronologiquement antérieure, des durées pour des signaux, avec lesquels une réadaptation d'une élimination d'écho est effectuée, sont transmises.

3. Procédé selon la revendication 1, **caractérisé en ce que,** dans une activation chronologiquement antérieure, des durées pour des signaux, avec lesquels les paramètres de ligne de transmission sont déterminés, sont transmises.

4. Procédé selon la revendication 1, **caractérisé en ce que** des durées de temps d'attente entre des séquences successives peuvent être prescrites variablement.
